# EUROPEAN PATENT APPLICATION

(11) **EP 1 903 699 A2**
(43) Date of publication of application: **26.03.2008**
(21) Application number: 07017770.4
(22) Date of filing: 11.09.2007
(51) Int. Cl.: H04H 60/72, H04H 60/65, H04H 60/31

(54) **Method and apparatus for selecting favorite broadcast program in digital broadcast receiver**

(30) Priority: 20.09.2006 KR 20060090954
(71) Applicant: Samsung Electronics Co., Ltd, Yeongtong-gu Suwon-si, Gyeonggi-do (KR)
(72) Inventor: Kim, Jae Ho, Suwon-si Gyeonggi-do (KR); Seo, Jeong Wook, Suwon-si Gyeonggi-do (KR); Lee, Je Geol, Suwon-si Gyeonggi-do (KR)
(74) Representative: Harrison Goddard Foote

(57) **Abstract**

A method and apparatus for selecting a favorite broadcast program in a digital broadcast receiver are disclosed. A favorite broadcasting time and a favorite broadcast program are stored in a database, based on a usage record of the digital broadcast receiver. The method includes receiving an electronic program guide in a broadcasting mode; analyzing broadcast program information of the received electronic program guide; selecting a favorite broadcasting time and a favorite broadcast program according to a usage record of the broadcasting receiver, and finding the favorite broadcast program in the electronic program guide and outputting the favorite broadcast program. Accordingly, a favorite channel may be easily selected by outputting a favorite broadcast program list in a digital broadcasting mode of a digital broadcast receiver.

## Description

### BACKGROUND OF THE INVENTION

### 1. Field of the Invention

The present invention relates to a method and apparatus for selecting a favorite broadcast program in a digital broadcast receiver, and more particularly, to a method and apparatus enabling easy selection of a favorite channel by storing a favorite broadcasting time and a favorite broadcast program in a database based on a usage record of a digital broadcast receiver, and by outputting a favorite broadcast program list.

### 2. Description of the Related Art

Recently, mobile communication terminals enabling reception of mobile digital broadcasting have become widely used. Mobile digital broadcasting includes a Digital Multimedia Broadcasting (DMB) system, Digital Video Broadcasting (DVB) system, and Media Forward Link Only (Media FLO) system.

Generally, a favorite broadcasting time and a favorite broadcast program differ according to personal characteristics of a digital broadcast receiver user, such as age, name, and occupation. Whereas clerical workers may prefer an evening time between 9:00 pm and 11:00 pm after leaving their offices, a businessman traveling frequently may enjoy mobile digital broadcasting while traveling in the daytime. Additionally, whereas preference for mobile digital broadcasting in the daytime of the week days may be relatively low, the preference for mobile digital broadcasting in a daytime of the weekend can be very high. This trend of preference may be repeated corresponding to a weekly program composition. Therefore, a notifying service is required for a mobile communication terminal user to recognize a favorite broadcasting time and a favorite broadcast program.

When watching a digital broadcasting program with a mobile communication terminal, a time delay of 4 - 5 seconds is conventionally required for changing a channel. In order to minimize the time delay in selecting or changing a channel, a digital broadcast receiver may be provided for easy selection of a favorite channel by displaying a user's favorite channel list on a terminal screen.

### SUMMARY OF THE INVENTION

The present invention has been made in view of the above problems, and an object of the present invention is to provide a method and apparatus for analyzing a usage record of a digital broadcast receiver.

Another object of the present invention is to provide a method and apparatus for managing a favorite broadcasting time and a favorite broadcast program by storing the favorite broadcasting time and favorite broadcast program in a database, based on a usage record of the broadcast programs in a digital broadcast receiver.

Another object of the present invention is to provide a method and apparatus enabling easy selection of a favorite channel by outputting a favorite broadcast program list in a digital broadcast receiver.

In order to achieve the above and other objects, a method for selecting a favorite broadcast program in a digital broadcast receiver according to the present invention includes receiving an electronic program guide or an electronic service guide in a broadcasting mode; analyzing broadcast program information of the received electronic program guide or the electronic service guide; selecting a favorite broadcasting time and a favorite broadcast program according to a usage record of the digital broadcast receiver; and finding the favorite broadcast program in the electronic program guide or the electronic service guide and outputting the favorite broadcast program.

A method for selecting a favorite broadcast program in a digital broadcast receiver according to the present invention includes receiving an electronic program guide or an electronic service guide in a broadcasting mode; analyzing broadcast program information of the received electronic program guide or the electronic service guide; selecting a favorite broadcasting time and a favorite broadcast program according to a usage record of the digital broadcast receiver; preparing a database of the selected favorite broadcast program; comparing the database with the broadcast program information of the electronic program guide or the electronic service guide; and outputting a favorite broadcast program list of programs being executed at the current time according to the comparison result.

In order to achieve the above and other objects, an apparatus for selecting a favorite broadcast program in a digital broadcast receiver according to the present invention includes a control unit for generating a database of a user's favorite broadcasting time and a favorite broadcast program by analyzing a usage record of the digital broadcast receiver; and a display unit for outputting a favorite broadcast program list.

### BRIEF DESCRIPTION OF THE DRAWINGS

The above and other objects, features and advantages of the present invention will become more apparent from the following detailed description in conjunction with the accompanying drawings, in which:
FIG. 1 is a block diagram showing a configuration of a digital broadcast receiver according to the present invention; and
FIGS. 2A and 2B are flow charts showing a method for selecting a favorite broadcast program in a digital broadcast receiver according to the present invention.

### DETAILED DESCRIPTION OF PREFERRED EMBODIMENTS

Hereinafter, preferred embodiments of the present invention are described in detail with reference to the accompanying drawings. The same reference numbers are used for the same or like components in the drawings. Additionally, detailed explanations for well-known functions and compositions may be omitted to avoid obscuring the subject matter of the present invention.

A digital broadcast receiver according to the present invention may have functions of photographing, mobile communication, digital broadcasting reception, and data processing.

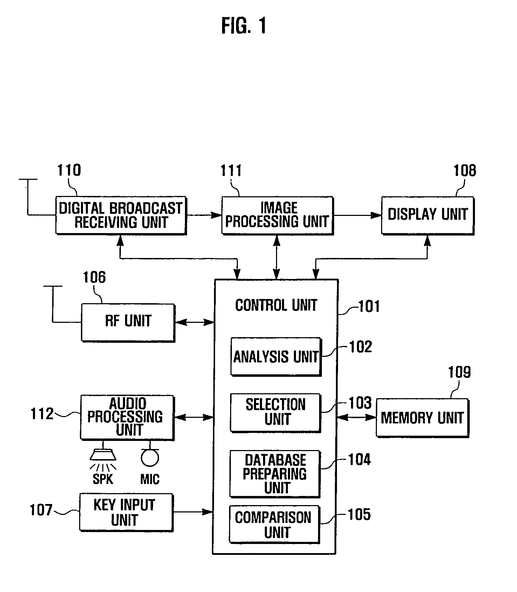

Referring to FIG. 1, the digital broadcast receiver includes a control unit 101, RF unit 106, key input unit 107, display unit 108, memory unit 109, digital broadcast receiving unit 110, image processing unit 111, and audio processing unit 112.

The control unit 101 includes an analysis unit 102, selection unit 103, database preparing unit 104, and comparison unit 105.

The control unit 101 controls the general operation of the digital broadcast receiver. The control unit 101 manages data exchange, data processing, and setting of a call, by controlling the RF unit 106, key input unit 107, display unit 108, memory unit 109, digital broadcast receiving unit 110, image processing unit 111, and audio processing unit 112.

The RF unit 106 performs wireless communication of the digital broadcast receiver. The key input unit 107 includes alphanumeric keys and function keys for inputting information, such as a telephone number.

The display unit 108 outputs a multimedia image and data broadcasting information received in a digital broadcasting mode. The display unit 108 further outputs a favorite broadcast program list in a broadcasting mode. The favorite broadcast program list may include a broadcast program title and broadcast program information such as a genre, characters, background, and properties.

The memory unit 109 stores system files for operating the digital broadcast receiver, and large capacity multimedia files and data broadcasting information received from a mobile digital broadcasting station.

The digital broadcast receiving unit 110 receives digital broadcasting data, and separates the digital broadcasting data into an audio signal and an image signal. The audio signal is output to the audio processing unit 112, and the image signal is decoded into an MPEG standard signal and output to the image processing unit 111. Particularly, the digital broadcast receiving unit 110 receives electronic program guide data from the mobile digital broadcasting station. The electronic program guide data includes an Electronic Program Guide (EPG) used in a DMB digital broadcasting system, and an Electronic Service Guide (ESG) used in a DVB digital broadcasting system.

The image processing unit 111 processes an image signal output in a digital broadcasting mode by the digital broadcast receiving unit 110 and user data output by the control unit 101, and outputs the image signal and user data to the display unit 108.

The audio processing unit 112 may be configured with a coder/decoder (CODEC) that includes a data CODEC for processing packet data and an audio CODEC for processing an audio signal such as a voice signal. The audio processing unit 112 converts a digital signal received from the RF unit 106 to an analog signal by using the audio CODEC, and outputs the analog signal through a speaker SPK. Additionally, the audio processing unit 112 converts an analog audio signal received from a microphone MIC to a digital audio signal by using the audio CODEC, and outputs the digital audio signal to the RF unit 106.

The analysis unit 102 analyzes broadcasting program information of the electronic program guide received through the digital broadcast receiving unit 110. The analysis unit 102 analyzes broadcasting program information (for example, a genre, characters, background, and properties) included in the ESG of a DVB-H system, and transmits the analyzed broadcast program information to the database preparing unit 104.

The selection unit 103 selects a favorite broadcasting time and a favorite broadcast program based on a usage record of the digital broadcast receiver.

The database preparing unit 104 prepares a database of the selected favorite broadcast program. The favorite broadcast program database includes a broadcast program title and broadcast program information such as characters, background, and properties.

The comparison unit 105 compares the database with the broadcast program information of the electronic program guide or the electronic service guide. When a command for executing a favorite broadcast program that is included in the database is input, the comparison unit 105 identifies whether the favorite broadcast program exists in the broadcast program of the ESG. Further, the control unit 101 may set an alarm with accordance to set time.

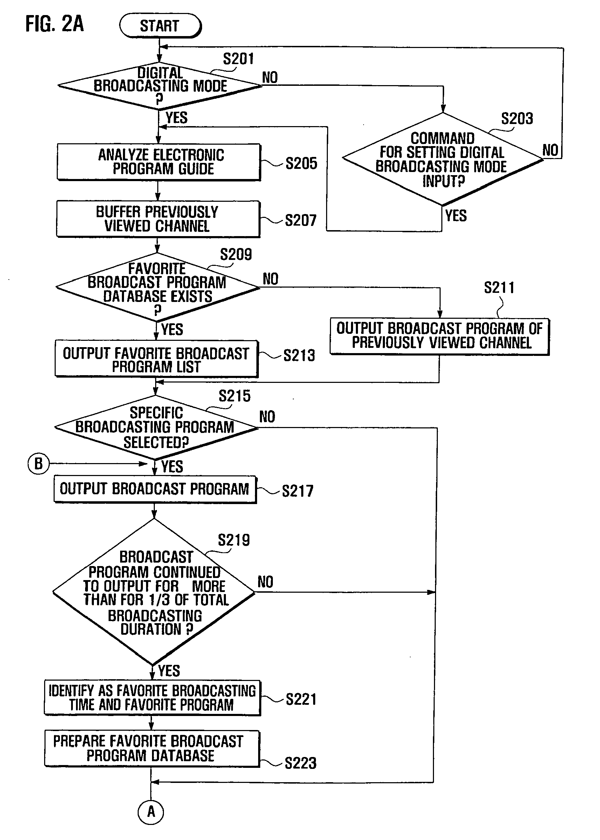

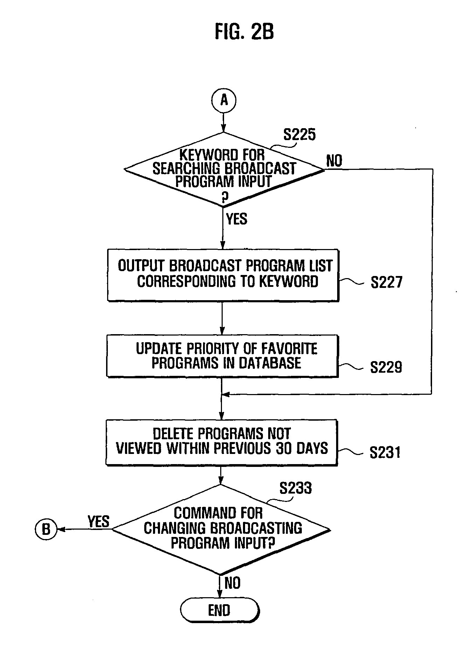

FIGS. 2A and 2B are flow charts showing a method for selecting a favorite broadcast program in a digital broadcast receiver according to the present invention.

Referring to FIGs. 2A and 2B, the control unit 101 identifies whether the digital broadcast receiver is in a digital broadcasting mode in step S201. If the digital broadcast receiver is not in a digital broadcasting mode, the control unit 101 identifies whether a command for setting the digital broadcasting mode is input in step S203.

When the digital broadcast receiver is in a digital broadcasting mode, the analysis unit 102 of the control unit 101 analyzes broadcast program information of an electronic program guide or an electronic service guide received through the digital broadcast receiving unit 110 in step S205. The analysis unit 102 analyzes broadcast program information (for example, a genre, characters, background, and properties) included in an ESG of a DVB-H system or an EPG of a DMB system. The ESG or EPG is received together with audio and video data in a digital broadcasting mode. The analyzed broadcast program. information is transmitted to the database preparing unit 104.

The digital broadcast receiving unit 110 buffers a broadcast signal currently being received from the same channel as was previously viewed in step S207. In the case that the digital broadcasting mode is terminated after viewing a broadcast program through a specific service channel, if the digital broadcasting mode is activated again, the control unit 101 automatically makes a connection to the service channel previously viewed and the digital broadcast receiving unit 110 buffers a signal currently being broadcast.

While buffering is executed in step S207, the control unit 101 identifies whether a favorite broadcast program database exists in the memory unit 109 in step S209. A usage record of the digital broadcast receiver, including a repeat number of times of viewing a specific program in a specific period, a broadcast program list sorted in the order of favorite broadcast programs viewed most frequently, and broadcast program information (for example, keywords of a genre and characters of the corresponding program), are stored in the favorite broadcast program database.

If a favorite broadcast program database does not exist in the memory unit 109, the control unit 101 displays broadcast program of the specific service channel that is being buffered in step S207 on the display unit 108 in step S211.

If a favorite broadcast program database exists in the memory unit 109, the comparison unit 105 compares the favorite broadcast program database with the broadcast program information of the electronic service guide or the electronic program guide, and if the favorite broadcast program exists in the broadcast program information of the electronic service guide or the electronic program guide, the control unit 101 displays a favorite broadcast program list on the screen of the display unit 108 in step S213.

Table 1 shows an example list of favorite broadcast programs viewed in the evening time between 8:00 pm and 9:00 pm.

**Table 1**

| Priority | Channel | Broadcasting station | Favorite time | Program | Genre | Characters | Theme song | Producer | Properties | Other Keywords |
|---|---|---|---|---|---|---|---|---|---|---|
| 1 | 10 | KBS1 | 20:00\|21:00 | Love and Desire | Drama | Actor A | Love and Desire | Director E | Apple MP3 | |
| 2 | 08 | KBS2 | 20:30\|20:50 | World of nimals | Documentary | Presenter B | Beethoven Symphony No 5 | Producer F | Channl cosmetics & Fashio n | Leopard |
| 3 | 12 | MBC | 20:05\|21:10 | MBC Pop Song | Entertainment | Singer C | | | | |
| 4 | 05 | SBS | 20:00\|20.55 | News Center | Culture | Anchor - man D | | | | Travel |

The control unit 101 identifies whether a priority number of a favorite program, as shown in Table 1, is input from the key input unit 107 in step S215.

If a priority number is input from the key input unit 107, the control unit 101 outputs, to the display unit 108, a specific broadcast program having the corresponding priority number in step S217.

If viewing the broadcasting program of the previously viewed channel at step S211 lasts longer than a predetermined duration (for example, 1 minute), the broadcast program is regarded as selected, and continues to output in step S215. The control unit 101 identifies whether the broadcast program has been output for more than one third of the total broadcasting duration of the program in step S219. The total broadcasting duration of a specific program may be identified by analyzing the ESG or EPG in step S205, and thereby the duration of viewing by the user of the broadcast program can be compared with the total broadcasting duration. If the broadcast program has been output for one third or is less than one third of the total broadcasting duration, step S225 (FIG. 2B) is executed.

If the broadcast program has been output for more than one third of the total broadcasting duration, the selection unit 103 regards the broadcast program and the viewing time as a favorite broadcast program and a favorite broadcasting time respectively in step S221. The database preparing unit 104 stores the favorite broadcast program and the favorite broadcasting time in the favorite broadcast program database in step S223. In addition to audio and video signals of the favorite program received in a digital broadcasting mode, a genre, characters, background, and properties are stored in the favorite broadcast program database, and thereby may be used as keywords for searching a broadcasting program.

The control unit 101 identifies whether a keyword for searching a broadcast program is input in step S225. If a previous broadcast channel has been selected without selecting a favorite broadcast program, step S215 or step S219 may proceed to step S225. The keywords may include all texts in the broadcast program information (for example, a broadcast program title, genre, characters, and a name of a leading entertainer) received together with audio and video signals of the broadcast program.

In step S227, the control unit 101 outputs, to the screen of the display unit 108, a broadcast program list in the order of favorite priority corresponding to a keyword input in step S225.

The database preparing unit 104 updates the priority of favorite broadcast programs based on the frequency of a keyword input and output times of a broadcast program in step S229. As the frequency of a keyword input and output times of a broadcast program increase, the priority of the favorite broadcast program becomes higher.

The control unit 101 optimizes the memory unit 109 by deleting broadcast programs not viewed for a predetermined time, such as the previous 30 days from the favorite broadcast program database in step S231.

The control unit 101 identifies whether a command for changing a channel is input in step S233. If a command for changing a program is not input, the current broadcast program continues to be output, and if a command for changing a program is input, another broadcast program is output by returning to step S217. Further, the control unit (101) may set a user's favorite broadcasting time that is output based on the electronic program guide or the electronic service guide as an alarm time. Namely, the control unit 101 sets an execution time of a favorite broadcast program as an alarm time, controls an output of a message on a display screen, recommending for the favorite broadcast program or as to whether to watch the favorite program in advance of an alarm time, and controls to output an alarm at the execution time of a favorite program.

As described above, if a favorite broadcasting time and a favorite broadcast program of a mobile communication terminal user is not identified in viewing a digital broadcasting program, a time delay of 4 - 5 seconds is inevitable for changing a channel, and thereby selection of a favorite broadcast program cannot be performed conveniently. The present invention has an advantage of easy selection of a favorite channel by analyzing a usage record of a digital broadcast receiver, preparing a database of a favorite time and a favorite broadcast program based on a usage record of a digital broadcast receiver, and outputting a favorite broadcast program list in a broadcasting mode.

Although exemplary embodiments of the present invention have been described in detail hereinabove, it should be understood that many variations and modifications of the basic inventive concept herein described, which may appear to those skilled in the art, will still fall within the spirit and scope of the exemplary embodiments of the present invention as defined in the appended claims.

## Claims

1. A method for selecting a favorite broadcast program in a digital broadcast receiver comprising:
receiving an electronic program guide or an electronic service guide in a broadcasting mode;
analyzing broadcast program information of the received electronic program guide or the electronic service guide;
selecting a favorite broadcasting time and a favorite broadcast program according to a usage record of the digital broadcast receiver; and
finding the favorite broadcast program in the electronic program guide or the electronic service guide and outputting the favorite broadcast program.

2. The method of claim 1, further comprising preparing a database of the selected favorite broadcast program.

3. A method for selecting a favorite program in a digital broadcast receiver comprising:
receiving an electronic program guide or an electronic service guide in a broadcasting mode;
analyzing broadcast program information of the received electronic program guide or the electronic program guide;
selecting a favorite broadcasting time and a favorite broadcast program according to a usage record of the digital broadcast receiver;
preparing a database of the selected favorite broadcast program;
comparing the database with the broadcast program information of the electronic program guide or the electronic service guide; and
outputting a favorite broadcast program list of programs being broadcast at the current time according to the comparison result.

4. The method of claim 3, further comprising determining, if a channel change command is input in a broadcasting mode, another favorite broadcast program at the time of inputting the channel change command and outputting another favorite broadcast program list.

5. The method of claim 3, wherein selecting a favorite broadcasting time and a favorite broadcast program comprises:
identifying whether a specific program is output; and
identifying, if a specific program is output, whether more than a predetermined portion of a broadcasting duration of the specific program is output.

6. The method of claim 5, wherein the predetermined portion of the broadcasting duration of the specific program is one third of the total broadcasting duration of the program.

7. The method of claim 3, wherein preparing a database of the selected favorite broadcast program comprises:
reading data of the selected favorite broadcasting time and favorite broadcast program;
storing the data and execution time of the favorite broadcast program;
increasing the frequency of the selected favorite broadcast program by one whenever a keyword included in the database of the favorite broadcast program is detected; and
setting, if the selected favorite broadcast program has been output more than a predetermined number of times within a predetermined time interval, the priority of the selected favorite broadcast program in proportion to the number of outputs.

8. The method of claim 3, wherein outputting a favorite broadcast program list comprises:
setting an alarm time corresponding to an execution time of the favorite broadcast program;
outputting, on a display screen, a recommendation message for the favorite broadcast program in advance of an alarm; and
outputting the alarm at the execution time of the favorite broadcast program.

9. An apparatus for selecting a favorite broadcast program in a digital broadcast receiver comprising:
a control unit for generating a database of a user's favorite broadcasting time and a favorite broadcast program by analyzing a usage record of the digital broadcast receiver; and
a display unit for outputting a favorite broadcast program list.

10. The apparatus of claim 9, wherein the control unit comprises:
an analysis unit for analyzing broadcast program information of an electronic program guide or an electronic service guide received in a broadcasting mode;
a selection unit for selecting a favorite broadcasting time and a favorite broadcast program according to the usage record of the digital broadcasting receiver;
a database preparing unit for preparing a database of the selected favorite broadcast program; and
a comparison unit for comparing the database with the broadcast program information of the electronic program guide or the electronic service guide.
